# EUROPÄISCHE PATENTANMELDUNG

(11) **EP 2 388 295 A1**
(43) Veröffentlichungstag der Anmeldung: **23.11.2011**
(21) Anmeldenummer: 11166374.6
(22) Anmeldetag: 17.05.2011
(51) Int. Cl.: C08L 61/18, C09J 161/18, C09D 161/18

(54) **Verfahren zur Herstellung eines transparenten Kunststoffmaterials**

(30) Priorität: 21.05.2010 EP 10163664
(71) Anmelder: Wietec Technologie KG, 56291 Wiebelsheim (DE)
(72) Erfinder: Würtz, Karin, 55543 Bad Kreuznach (DE); Würtz, Peter, 55543 Bad Kreuznach (DE)
(74) Vertreter: WSL Patentanwälte

(57) **Zusammenfassung**

Es wird ein Verfahren zur Herstellung eines Kunststoffmaterials aus einer Kunststoffzubereitung vorgeschlagen, die eine wässrige Verdünnung einer Kunststoffzusammensetzung ist, welche eine Polymerkomponente (A) mit einer begrenzten Wasserverdünnbarkeit enthält. Zur Erhöhung der Wasserverdünnbarkeit der Polymerkomponente (A) wird der Kunststoffzusammensetzung eine Modifikatorkomponente (B) zusetzt, die ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht, wobei die Modifikatorkomponente (B) durch die Säuregruppen -NO₂⁻, -NO₃⁻, -SO₂⁻, -SO₃⁻, - SO₄²⁻, -PO₂²⁻, -PO₃²⁻ oder -PO₄²⁻ anionisch modifiziert ist bzw. durch die entsprechenden Thio-Phosphate, Thio-Phosphonate, Thio-Sulfate und Thio-Sulfonate, und unter durch Sulfonsäure, Cyanursäure und Isocyanursäure, und wobei die Vernetzerkomponente ein Aldehyd oder ein Aldehydvorläufer ist. Bei einer Verdünnung der Kunststoffzusammensetzung in dem Verhältnis 1:1 bis 1:1000 Kunststoffzusammensetzung zu Wasser kann eine Kunststoffzubereitung erlangt werden, die trotz der hohen Verdünnung noch transparent ist. Desweiteren werden entsprechende Kunststoffmaterialien, Kunststoffzusammensetzungen und Kunststoffzubereitungen vorgeschlagen.

## Beschreibung

Die Erfindung betrifft ein Verfahren zur Herstellung eines vorzugsweise transparenten Kunststoffmaterials aus einer Kunststoffzusammensetzung, wobei die Kunststoffzusammensetzung eine Polymerkomponente (A) enthält, die eine begrenzte Wasserverdünnbarkeit von höchstens 1:4 Polymerkomponente (A) zu Wasser aufweist. Desweiteren werden entsprechende Kunststoffmaterialien, Kunststoffzusammensetzungen und Kunststoffzubereitungen beschrieben.

Polymerzubereitungen, vorzugsweise Polykondensationsprodukte, werden für viele technische Anwendungen wie Klebstoffe, Überzüge/Beschichtungen bzw. Oberflächen allgemein eingesetzt. Beispielsweise werden mit Polymerzubereitungen saugfähige Trägerstoffe wie Papier, Fasermatten oder Gewebe imprägniert, wobei die so imprägnierten Stoffe nach dem Trocknen durch Heißpressen zu Schichtpreßstoffen geformt oder zur Oberflächenbeschichtung von Werkstoffen wie Lignocelluloseplatten, oder zur Herstellung von Schichtpreßstoffen verwendet werden.

Um eine gute Klebkraft zu gewährleisten, weisen die für die vorbenannten Verfahren verwendeten Polymerzubereitungen stets nur eine begrenzte Wasserverdünnbarkeit auf, was sich u.a. dadurch zeigt, dass diese bereits nach Zugabe von häufig weniger als 50% Wasser eintrüben oder aber bereits von vornherein als milchige Dispersion vorliegen.

Für die vorgenannten Zwecke werden im Stand der Technik u.a. Polymerzubereitungen beschrieben, bei denen es sich um Aldehyd-vernetzte Polykondensationsprodukte handelt, die auf einer Matrix auf Basis von beispielsweise Melamin, Harnstoff, Phenol oder auf Mischungen dieser Moleküle aufgebaut sind und jeweils mit einem Aldehyd (vorzugsweise Formaldehyd) unter Wasseraustritt zu Polymeren kondensiert werden. Die Melamin oder Harnstoff enthaltenden Polykondensate werden wegen des darin vorhandenen Stickstoffs auch als Aminoharze bezeichnet, wobei in Günter, Matthias und Diem, Hans, Ullmanns Enzyklopädie der Industriellen Chemie, Verlag Chemie Weinheim 1985, S. 122 ff. beispielhaft der zu Aminoharzen führende Kondensationsprozeß technisch beschrieben ist.

Aufgrund ihrer hohen Reaktivität, die auf den Überschuß des hoch-reaktiven aldehydischen Reaktionspartners zurückzuführen ist, zeichnen sich die vorgenannten Polykondensate üblicherweise durch eine stark begrenzte Lagerfähigkeit sowie durch eine insbesondere mit Wasser begrenzte Mischbarkeit aus. Dies trifft in besonderem Maße auf handelsübliche Darreichungsformen besagter Polykondensationsprodukte zu, die wegen der initial ausgeführten Polykondensation, bei der Wassermoleküle aus der Polymermatrix austreten, bereits einen bestimmten, typischen Wassergehalt aufweisen, wenn beispielsweise ein Molverhältnis von 1 mol Melamin, Harnstoff und/oder Phenol zu 1 bis 3,5 mol Formaldehyd für die Reaktion zugrunde gelegt wird (wird mehr Formaldehyd verwendet, verbessert sich zwar die Wasserverdünnbarkeit des Polykondensates, aber zugleich reduziert sich die Klebkraft, da das Polykondensat dann insgesamt hydrophil wird).

Wird der Wassergehalt durch Wasserzugabe erhöht, flocken zunächst diejenigen Polykondensationsprodukte aus, die das höchste Molekulargewicht und die geringste Wasserverdünnbarkeit besitzen, es kommt zu einer milchigen Eintrübung und im weiteren Verlauf zu festen Ausflockungen, die sich am Boden absetzen. Diese unlöslichen Bestandteile schränken die Verwendbarkeit besagter Polykondensationsprodukte ein.

Unter Wasserverdünnbarkeit ist in diesem Zusammenhang zu verstehen, dass sich bei Zugabe von Wasser zu den Polymerzubereitungen keine sichtbaren Ausflockungen bzw. Eintrübungen bilden. Eine Polymerzubereitung gilt somit dann als mit einer vorbestimmten Menge an Wasser verdünnbar, wenn sich als Ergebnis eine Verdünnung bildet, die klar ist, d.h. weder mit dem Auge erkennbare Ausflockungen noch Eintrübungen aufweist (siehe hierzu auch weiter unten).

Bei der praktischen Handhabung von begrenzt wasserverdünnbaren Polykondensaten spielt deren schlechte Wasserverdünnbarkeit eine nicht zu unterschätzende Rolle.

Beispielsweise ergeben sich Nachteile, wenn mit begrenzt wasserverdünnbaren Polykondensaten saugfähige Trägerstoffe wie Papier, Fasermatten oder Gewebe imprägniert werden sollen, da es mit begrenzt wasserverdünnbaren Polykondensaten bisher nicht möglich ist, hohe Verdünnungsgrade und damit die gewünscht niedrigen Viskositäten einzustellen. Dementsprechend schlecht ist die bisher hiermit erreichbare Durchtränkung der vorbezeichneten Substrate.

Weiterhin ergeben die mit Wasser verdünnten, eingetrübten begrenzt wasserverdünnbaren Polykondensate keine transparenten Überzüge, was in der Handhabung zu Problemen führen kann. Beispielsweise wird das (automatische) Erkennen/Ablesen von Markierungen auf den behandelten Oberflächen durch die Eintrübung erschwert.

Es besteht daher ein Bedarf nach einer Möglichkeit, Polykondensate mit begrenzter Wasserverdünnbarkeit in stärkerem Maße mit Wasser so verdünnen zu können, ohne dass es hierbei zu einer Eintrübung oder zu Ausflockungen kommt.

In DE 199 35 830 A 1 wird der maximale Wassergehalt, den ein Polykondensationsharz bei einer bestimmten Temperatur aufnehmen kann ohne auszuflocken, als Trübungspunkt bezeichnet. In DE 199 35 830 A1 sind weiterhin physikalische Verfahren beschrieben, vorzugsweise auf Basis von Lichtdurchlässigkeitsmessungen, die es ermöglichen, den Trübungspunkt automatisch kontinuierlich zu bestimmen. DE 199 35 830 A 1 beschreibt jedoch nicht, wie man das Eintrüben bei Erhöhung des Wasseranteiles über den Trübungspunkt hinaus verhindern kann.

In DE 26 04 195 sind vergilbungsfrei aushärtbare Melamin-Formaldehyd-Polykondensate beschrieben. Weiterhin werden Elastifizierungs- und/oder Fließmittel beschrieben. Wie aus den weiter unten beschriebenen Vergleichsversuchen ersichtlich wird, sind diese Hilfsmittel allerdings nicht geeignet, um die Wasserverdünnbarkeit der Polykondensate, wie Sie bei der vorliegenden Erfindung verwendet werden, so zu verbessern, dass keine Eintrübung bei deren Verdünnung mit einer bestimmten Menge an Wasser auftritt.

In DE 696 02 414 T2sind Caprolactam und cyclische Ketone als Stabilisierungsmittel von Melamin-Formaldehyd-Polykondensationsharzen beschrieben. Zwar steigt durch Zugabe dieser Stabilisierungsmittel die Wasserverdünnbarkeit der Polykondensate, allerdings bei weitem nicht in dem Maße, wie es gewünscht ist.

In DE 41 24 688 A1 sind härtbare Mischungen aus Polykondensaten und polyfunktionellen Formamiden bzw. Reaktivverdünnern beschrieben. Aufgrund des hohen Veretherungsgrades der Verbindungen stellt sich bei diesen die Problematik der Wasserverdünnbarkeit nicht. Dementsprechend fallen die in DE 41 24 688 A1 beschriebenen Polykondensate auch nicht unter die Polykondensate, um die es bei der vorliegenden Erfindung geht, nämlich Polykondensate, die eine begrenzte Wasserverdünnbarkeit von höchstens 1:4 aufweisen. Im übrigen haben diese Polykondensate eine verminderte Klebkraft.

In DE 25 40 207 C2 sind Formmassen auf der Grundlage eines Polyoxymethylens und eines Antioxidationsmittels beschrieben, wobei dieser Mischung ein feinteiliges, nahezu wasserunlösliches Fällungspolykondensat zugesetzt wird. Die in DE 25 40 207 C2 zugesetzten Schutzkolloide bewirken keine Verbesserung der Wasserverdünnbarkeit der Polykondensate, wie aus den weiter unten beschriebenen Vergleichsversuchen ersichtlich wird.

WO 2004/065484 A1 behandelt Zuschlagstoffe/Modifizierungsmittel für begrenzt wasserverdünnbare Polykondensate auf Basis von Copolymerisaten der Acryl- und Methacrylsäure. Weiterhin sind als Zuschlagstoffe Guanamin und Acrylatdispersionen genannt. Die in WO 2004/065484 A1 genannten Zuschlagstoffe zu den begrenzt wasserverdünnbaren Polykondensaten verbessern jedoch nicht deren Wasserverdünnbarkeit so, dass eine Eintrübung bei deren Verdünnung mit Wasser auftritt (vgl. auch Beispiele 8 und 9 weiter unten).

Vor dem Hintergrund dieses Standes der Technik war es die Aufgabe der vorliegenden Erfindung ein Verfahren bereitzustellen, mit dem die Wasserverdünnbarkeit einer begrenzt mit Wasser verdünnbaren Polymerkomponente erhöht werden kann, ohne dass es zu einer Eintrübung oder zu Ausflockungen bei deren Verdünnung mit einer bestimmten Menge an Wasser kommt.

Diese Aufgabe wird gelöst durch ein Verfahren der eingangs genannten Art, bei dem man
a) der Kunststoffzusammensetzung zur Erhöhung der Wasserverdünnbarkeit der Polymerkomponente (A) eine Modifikatorkomponente (B) zusetzt, wobei die Modifikatorkomponente (B) ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht, wobei die Modifikatorkomponente (B) anionisch modifiziert ist durch Säuregruppen, die ausgewählt sind unter -NO₂⁻, -NO₃⁻, -SO₂⁻, - SO₃⁻ , -SO₄²⁻, -PO₂²⁻, -PO₃²⁻, -PO₄²⁻, sowie entsprechenden Thio-Phosphaten, Thio-Phosphonaten, Thio-Sulfaten und Thio-Sulfonaten, und unter Sulfonsäure, Cyanursäure und Isocyanursäure, und wobei die wenigstens eine Vernetzerkomponente ein Aldehyd oder ein Aldehydvorläufer ist, und
b) eine Verdünnung der Kunststoffzusammensetzung in dem Verhältnis 1:1 bis 1:1000 Kunststoffzusammensetzung zu Wasser einstellt.

Bereits bei Zugabe kleinster Mengen der erfindungsgemäßen Komponente (B) zu der begrenzt wasserverdünnbaren Komponente (A) findet eine deutliche Verbesserung von deren Wasserverdünnbarkeit statt. Daher sind erfindungsgemäße Mischungsverhältnisse 1:1000 bis 1000:1, vorzugsweise 1:100 bis 100:1, besonders bevorzugt 80:20 bis 20:80, wobei die erste Zahl den Anteil an Komponente (A) und die zweite Zahl den Anteil an Komponente (B) beschreibt.

Alle Mischungsverhältnisangaben sowie Konzentrationsangaben der vorliegenden Schrift beziehen sich auf Gewichtsprozent (Masse/Masse).

Eine Polymerzubereitung gilt im Zusammenhang mit der vorliegenden Erfindung dann als mit einer vorbestimmten Menge an Wasser verdünnbar, wenn sich als Ergebnis eine Verdünnung bildet, die klar bzw. transparent ist, d.h. eine Verdünnung, die weder sichtbare Ausflockungen noch sichtbare Eintrübungen aufweist. Die Wasserverdünnbarkeit gibt also den Grad an bis zu dem eine Polymerzubereitung mit Wasser klar verdünnbar ist und eine klare Verdünnung ergibt. Bei der erhaltenen Verdünnung handelt es sich daher nicht zwingend um eine "ideale Lösung", wie z.B. bei in Wasser gelösten hydratisierten Salzionen. Die Wasserverdünnbarkeit umfasst außerdem sowohl den Anteil von Wasser, der in der Verdünnung in Form von freiem Wasser vorliegt, als auch den Anteil von Wasser, der in der Verdünnung für das Quellen des/der in der Verdünnung enthaltenen Polymers/Polymere verantwortlich ist. Ein Verfahren zur Bestimmung der Klarheit bzw. Transparenz ist weiter unten beschrieben.

Das erfindungsgemäße Verfahren führt dazu, dass die Wasserverdünnbarkeit der begrenzt mit Wasser verdünnbaren Polymerkomponente (A) erhöht wird, so dass größere wässrige Verdünnungen erzeugt werden können, ohne dass es zu einer Eintrübung oder zu Ausflockungen kommt. Auf diese Weise kann eine wässrige Kunststoffzubereitung der Polymerkomponente (A) erhalten werden, mit der ein hochwertiges, vorzugsweise transparentes Kunststoffmaterial hergestellt werden kann, und die aufgrund der hohen Wasserverdünnbarkeit v.a. bei der Reinigung der Produktionsanlagen Vorteile in der praktischen Handhabung mit sich bringt.

Außerdem wird bei der Verarbeitung von saugfähigen Trägerstoffen, auf die der Kunststoff aufzubringen ist, eine bessere Durchtränkung dieser Substrate geliefert.

Darüber hinaus ergeben sich weitere Vorteile durch das erfindungsgemäße Verfahren, da hierdurch individuell die jeweils gewünschte Wasserverdünnbarkeit eingestellt werden kann, indem die Beimischung der Modifikatorkomponente (B) entsprechend bemessen wird. Besonders vorteilhaft ist, dass die Einstellung der gewünschten Wasserverdünnbarkeit auch nachträglich erfolgen kann. So kann beispielsweise, wenn bereits eine gewisse Menge an Polymerkomponente (A) mit Wasser verdünnt wurde, nachträglich Modifikatorkomponente (B) zu der Verdünnung zugegeben werden, um die Wasserverdünnbarkeit der Polymerkomponente (A) nachträglich zu erhöhen.

Im Vergleich hierzu fußt die Wasserverdünnbarkeit der in DE 41 24 688 A1 genannten Polykondensate auf einer direkten kovalenten Modifikation des Polykondensates. Der Grad der Wasserverdünnbarkeit wird also einmal eingestellt und eine individuelle Anpassung oder eine nachträgliche Korrektur ist auf diese Weise nicht zu erreichen.

Grundsätzlich werden von der Erfindung alle Kunststoffzusammensetzungen umfaßt, die als Polymerkomponente (A) ein begrenzt wasserverdünnbares Polymer mit einer Wasserverdünnbarkeit von höchstens 1:4 Polymerkomponente (A) zu Wasser und zusätzlich die Polymerkomponente (B) enthalten.

Polymerkomponenten im Sinne der vorliegenden Erfindung sind wenigstens Trimere oder höhere Oligomere des jeweiligen Polymerbausteins bzw. der jeweiligen Polymerbausteine. In handelsüblichen Produkten macht die eigentliche Polymerkomponente bezogen auf den Festkörpergehalt häufig lediglich einen Gewichtsanteil von weniger als 65 Gewichtsprozent aus (siehe hierzu auch weiter unten: Ergebnis der Umsetzung von Melamin mit Formaledhyd).

Die erfindungsgemäße Kunststoffzubereitung ist grundsätzlich flüssig und synthesebedingt wasserhaltig, wobei bei bestimmten Ausführungsformen der Erfindung die Polymerkomponente (A) als solche bei Raumtemperatur fest ist (sogenannte Pulverharze). Bei anderen Ausführungsformen ist die Polymerkomponente (A) bei Raumtemperatur selbst auch flüssig.

Bei bestimmten bevorzugten Ausführungsformen ist die Polymerkomponente (A) unter Polyacrylaten, Polymethacrylaten, Copolymeren Acryl-/Methacrylaten, Polyesteracrylaten, Epoxyacrylaten, Urethanacrylaten und Kautschukelastomeren oder auch unter Epoxidharzen und Polyurethanen ausgewählt, wobei bevorzugte Kautschukelastomere Latexdispersionen sind.

Die Polymerkomponente (A) ist definiert durch eine begrenzte Wasserverdünnbarkeit von höchstens 1:4 Polymerkomponente (A) zu Wasser. In manchen Fällen wird die Polymerkomponente (A) im Gemisch eingesetzt, in welchem Gemisch auch ein oder mehrere andere(r) Stoff(e) enthalten sein kann/sein können, der/die nicht unter die erfindungsgemäße Definition von Polymerkomponente (A) fällt/fallen, wie z.B. ein Stoff, der kein Polymer im Sinne der vorliegenden Erfindung ist oder ein Stoff, der eine Wasserverdünnbarkeit von mehr als 1:4 dieses Stoffes zu Wasser aufweist. Solche Stoffe, die kein Polymer sind oder die eine Wasserverdünnbarkeit von mehr als 1:4 dieses Stoffes zu Wasser aufweisen sind jedoch auch dann nicht Bestandteil von Polymerkomponente (A), wenn sie Bestandteil eines Gemisches von Stoffen sind, welches die Polymerkomponente (A) umfasst.

Bei einer Ausführungsform der Erfindung ist die Polymerkomponente (A) ein Polykondensationsprodukt aus 1 mol Melamin und/oder Harnstoff und/oder Phenol und 1 bis 3,5 mol Formaldehyd.

Bei der Umsetzung von Melamin mit Formaledhyd im Molverhältnis 1 Melamin zu 1 bis 3,5 mol, vorzugsweise 2 mol Formaldehyd laufen während der Reaktion verschiedene komplexe Reaktionen nebeneinander ab. Zunächst wird das wasserunlösliche Melamin mit Formaldehyd zu Mono-, Di, Tri-, Tetra-, Penta- oder Hexaoxymethylenmelamin umgesetzt. Bei dem besonders bevorzugten Molverhältnis von 1 mol Melamin zu 2 mol Formaldehyd entstehen dabei aus stöchiometrischen Gründen vorzugsweise Mono- und Dimethylolmelamin. Letztere vermögen bei Fortschreiten der Reaktion mit sich selbst sowie untereinander zu reagieren, wobei die Veretherungsreaktion unter Wasseraustritt erfolgt, weswegen man von einer Polykondensationsreaktion spricht.

Sowohl bei dem auch nach Abschluss der Reaktion in handelsüblichen Polykondensationprodukten noch vorliegenden Melamin-Anteil wie auch bei den nicht abreagierten Mono- und Dimethylolmelamin-Anteilen handelt es sich selbstverständlich nicht um poly- oder auch oligomere Komponenten im Sinne der vorliegenden Anmeldung. Ferner gelten auch die einfachen Dimere aus den vorgenannten Mono- bzw. Dimethylolmelaminen nicht als Polymere. Erst bei Anlagerung von 3 gleich aufgebauten Einheiten (Trimere) wird im Sinne der vorliegenden Anmeldung von einem Polymer gesprochen werden.

Grundsätzlich werden von der Erfindung alle Kunststoffzusammensetzungen umfasst, die zur Erhöhung der Wasserverdünnbarkeit der Polymerkomponente (A) mit einer Modifikatorkomponente (B) ergänzt sind, wobei die Modifikatorkomponente (B) ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht und die wenigstens eine Vernetzerkomponente ein Aldehyd oder ein Aldehydvorläufer ist. Von den vorgenannten anionisch modifizierten aromatischen oder aliphatischen Bausteinen der Rückgratkomponente sind Acrylsäure- und Methacrylsäurederivate vorzugsweise ausgenommen, da sie unter Umständen eintrübende Eigenschaften mit sich bringen können.

Die erfindungsgemäße Kunststoffzusammensetzung ist grundsätzlich flüssig, wobei bei bestimmten Ausführungsformen der Erfindung die Modifikatorkomponente (B) als solche bei Raumtemperatur fest ist. Bei anderen Ausführungsformen ist die Modifikatorkomponente (B) bei Raumtemperatur selbst auch flüssig.

Bei bestimmten bevorzugten Ausführungsformen sind der eine oder die mehreren anionisch modifizierten aromatischen oder aliphatischen Bausteine ausgewählt unter anionisch modifiziertem Toluol, Xylol, Mesitylen, Benzol, Cresol, Resorcin, Naphthol, Naphthalin, Melamin, Anthracen, Phenol, Bisphenol A, Lignin und Harnstoff oder anionisch modifizierten alkylierten, alkoxylierten oder arylierten Derivaten dieser Bausteine.

Bei einer Alternative der Erfindung sind die anionisch modifizierten alkylierten Derivate der Bausteine von Modifikatorkomponente (B) bevorzugt anionisch modifiziertes mono- oder polyalkyliertes Naphthalin, mono- oder polyalkyliertes Phenol, mono- oder polyalkyliertes Lignin.

Bei einer anderen Alternative der Erfindung sind die anionisch modifizierten alkoxylierten Derivate der Bausteine von Modifikatorkomponente (B) bevorzugt anionisch modifiziertes mono- oder polyalkoxyliertes Phenol, Alkylphenol, Naphthalin.

Bei einer weiteren Alternative der Erfindung sind die anionisch modifizierten arylierten Derivate der Bausteine von Modifikatorkomponente (B) vorzugsweise anionisch modifiziertes mono- oder polyaryliertes Phenol.

Vorzugsweise ist die wenigstens eine Vernetzerkomponente der Modifikatorkomponente (B) ausgewählt unter Acetaldehyd, Butyraldehyd, Butyldialdehyd, Formaldehyd, Glyoxal, Paraformaldehyd, Paraldehyd oder Alkoholen, die unter geeigneten Reaktionsbedingungen in Gegenwart von geeigneten Katalysatoren freie Aldehyde ergeben, wobei in dieser Hinsicht bevorzugte Alkohole Methanol, Ethanol, Butanol und Butandiol sind.

Die Rückgratkomponente der Modifikatorkomponente (B) ist anionisch modifiziert durch Säuregruppen, die ausgewählt sind unter -NO₂⁻, -NO₃⁻, -SO₂⁻, -SO₃⁻, -SO₄²⁻, -PO₂²⁻, -PO₃²⁻, -PO₄²⁻, sowie entsprechenden Thio-Phosphaten, Thio-Phosphonaten, Thio-Sulfaten und Thio-Sulfonaten, und unter Sulfonsäure, Cyanursäure und Isocyanursäure. Demnach enthalten der eine oder die mehreren anionisch modifizierten aromatischen oder aliphatischen Bausteine der Rückgratkomponente der Modifikatorkomponente (B) keine Carboxyl-Gruppen.

Die anionische Modifikation der Rückgratkomponente der Modifikatorkomponente (B) kann beispielsweise durch Sulfonierung oder Phosphorylierung erfolgen, vorzugsweise durch Sulfonierung oder Phosphorylierung. Die anionische Modifikation kann dabei unmittelbar an der Rückgratkomponente (z.B. Direktsulfonierung am Aromaten) und/oder an etwaigen Seitenketten (z.B. Direktsulfonierung aliphatischer Substituenten am Aromaten) erfolgen.

Nach Einführung der aciden Säuregruppen bei der anionischen Modifikation der Rückgratkomponente kann die Neutralisation durch geeignete basische Medien (Gegenionen) erfolgen, wie beispielsweise Natrium-, Calcium-, Magnesium-, Kalium- und/oder Ammonium-Hydroxid, derivatisierte aliphatische Mono- und/oder Polyamine (wie beispielsweise derivatisierte und/oder nicht-derivatisierte Mono- und/oder Polyalkylamine und/oder derivatisierte und/oder nicht-derivatisierte Mono- und/oder Polyalkanolamine) und/oder derivatisierte und/oder nicht-derivatisierte aromatische Mono- und/oder Polyamine und/oder derivatisierte und/oder nicht-derivatisierte heterozyklische Mono- und/oder Polyamine und/oder andere geeignete Komponenten.

Bestimmte Ausführungsformen der Erfindung sind dadurch gekennzeichnet, dass das Molekulargewicht der Modifikatorkomponente (B) in dem Bereich von 150 g/mol bis 500 Millionen g/mol liegt. Vorzugsweise liegt das Molekulargewicht der Modifikatorkomponente (B) in dem Bereich von 1.000 bis 1.000.000 g/mol, besonders bevorzugt in dem Bereich von 2.000 bis 500.000 g/mol.

Bei bevorzugten Ausführungsformen liegt die erfindungsgemäße Kunststoffzusammensetzung in Form einer Kunststoffzubereitung mit einem Wasseranteil vor. Der Wasseranteil der Kunststoffzubereitung kann dabei bis zu 80 Gew.% bezogen auf das Gesamtgewicht der Kunststoffzubereitung betragen.

Es ist für den Fachmann offensichtlich, dass die Kunststoffzubereitung auch in Form einer Kunststoffzubereitung vorliegen kann, die zusätzlich zu den Komponenten (A) und (B) wahlweise noch eines oder mehrere unter Pigmenten, Füllstoffen, Katalysatoren, Dispergiermitteln, Netzmitteln, Trennmitteln und/oder weiteren Zuschlagstoffen/Additiven enthalten kann. Zu den in dieser Hinsicht in Betracht kommenden Pigmenten und/oder Füllstoffe zählen beispielsweise Al₂O₃ und/oder TiO₂. Der Anteil der Pigmente und/oder Füllstoffe kann dabei zwischen 0,1 und 60 Gew.% bezogen auf das Gesamtgewicht der Kunststoffzubereitung betragen. Der Anteil der Katalysatoren ("Härter") kann dabei bis zu 30 Gew.% bezogen auf das Gesamtgewicht der Kunststoffzubereitung betragen. Der Anteil der Netzmittel kann dabei bis zu 30 Gew.% bezogen auf das Gesamtgewicht der Kunststoffzubereitung betragen. Der Anteil der Trennmittel kann dabei bis zu 30 Gew.% bezogen auf das Gesamtgewicht der Kunststoffzubereitung betragen.

Von der vorliegenden Erfindung umfasst wird selbstverständlich auch das vorzugsweise transparente Kunststoffmaterial das nach einem der vorgenannten Verfahren aus einer Kunststoffzusammensetzung bzw. Kunststoffzubereitung gemäß der vorliegenden Erfindung erhältlich ist. Ausführlichere Angaben zu Beispielen für solche Kunststoffmaterialien finden sich weiter unten.

Von der vorliegenden Erfindung umfasst wird außerdem auch die Verwendung einer Modifikatorkomponente (B) zur Erhöhung der Wasserverdünnbarkeit einer Polymerkomponente (A), die von Hause aus eine begrenzte Wasserverdünnbarkeit von höchstens 1:4 Polymerkomponente (A) zu Wasser aufweist, bei der Herstellung eines vorzugsweise transparenten Kunststoffmaterials umfassend die Polymerkomponente (A), wobei die Modifikatorkomponente (B) ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht, wobei die Modifikatorkomponente (B) anionisch modifiziert ist durch Säuregruppen, die ausgewählt sind unter -NO₂⁻, -NO₃⁻, -SO₂⁻, -SO₃⁻, -SO₄²⁻, -PO₂²⁻, -PO₃²⁻, -PO₄²⁻, sowie entsprechenden Thio-Phosphaten, Thio-Phosphonaten, Thio-Sulfaten und Thio-Sulfonaten, und unter Sulfonsäure, Cyanursäure und Isocyanursäure, und wobei die wenigstens eine Vernetzerkomponente ein Aldehyd oder ein Aldehydvorläufer ist.

Vorzugsweise enthalten der eine oder die mehreren anionisch modifizierten aromatischen oder aliphatischen Bausteine der Rückgratkomponente der Modifikatorkomponente (B) keine Carboxyl-Gruppen.

Vorzugsweise findet die beschriebene Verwendung Anwendung in dem oben beschriebenen Verfahren zur Herstellung eines vorzugsweise transparenten Kunststoffmaterials aus einer Kunststoffzusammensetzung, die die Polymerkomponente (A) und die Modifikatorkomponente (B) enthält. Vorzugsweise liegt diese Kunststoffzusammensetzung in Form einer Kunststoffzubereitung mit einem Wasseranteil vor, wobei eine Verdünnung der Kunststoffzubereitung in dem Verhältnis 1:1 bis 1:1000 Kunststoffanteil zu Wasser eingestellt wird.

Von der vorliegenden Erfindung umfasst wird weiterhin eine Kunststoffzusammensetzung, die dadurch gekennzeichnet ist, dass sie eine Polymerkomponente (A), die eine begrenzte Wasserverdünnbarkeit von höchstens 1:4 Polymerkomponente (A) zu Wasser aufweist, und wenigstens eine Modifikatorkomponente (B) umfasst, wobei die wenigstens eine Modifikatorkomponente (B) ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht, wobei die Modifikatorkomponente (B) anionisch modifiziert ist durch Säuregruppen, die ausgewählt sind unter -NO₂⁻, -NO₃⁻, -SO₂⁻, -SO₃⁻, - SO₄²⁻, -PO₂²⁻, -PO₃²⁻, -PO₄²⁻, sowie entsprechenden Thio-Phosphaten, Thio-Phosphonaten, Thio-Sulfaten und Thio-Sulfonaten, und unter Sulfonsäure, Cyanursäure und Isocyanursäure, und wobei die wenigstens eine Vernetzerkomponente ein Aldehyd oder ein Aldehydvorläufer ist. Dementsprechend enthalten der eine oder die mehreren anionisch modifizierten aromatischen oder aliphatischen Bausteine der Rückgratkomponente der Modifikatorkomponente (B) keine Carboxyl-Gruppen.

Darüber hinaus umfasst die vorliegende Erfindung eine mit Wasser verdünnte transparente Kunststoffzubereitung zur Verwendung bei der Herstellung eines vorzugsweise transparenten Kunststoffmaterials, wobei die Kunststoffzubereitung eine wässrige Verdünnung der in diesem Absatz genannten Kunststoffzusammensetzung ist.

Vorzugsweise findet die beschriebene Kunststoffzusammensetzung bzw. Kunststoffzubereitung Anwendung in dem oben beschriebenen Verfahren zur Herstellung eines vorzugsweise transparenten Kunststoffmaterials aus einer Kunststoffzusammensetzung, die die Polymerkomponente (A) und die Modifikatorkomponente (B) enthält. Vorzugsweise liegt dabei die Kunststoffzusammensetzung in Form einer Kunststoffzubereitung mit einem Wasseranteil vor, wobei eine Verdünnung der Kunststoffzubereitung in dem Verhältnis 1:1 bis 1:1000 Kunststoffanteil zu Wasser eingestellt wird.

Bei dem erfindungsgemäßen Verfahren sowie im Falle des erfindungsgemäßen Kunststoffmaterials, der erfindungsgemäßen Verwendung, der erfindungsgemäßen Kunststoffzusammensetzung und der erfindungsgemäßen Kunststoffzubereitung handelt es sich bei bestimmten Ausführungsformen der Erfindung bei dem Kunststoffmaterial um eine Kunststoffbeschichtung zum Beschichten von Trägermaterialien. Bei darunter bevorzugten Ausführungsformen ist dieses Trägermaterial ausgewählt unter Kunststofffolien, textilen Fasern, Vliesen, Faser-, Span- oder OSB-Platten, Dekor-Papieren und Al₂O₃-haltigen "Overlay"-Papieren.

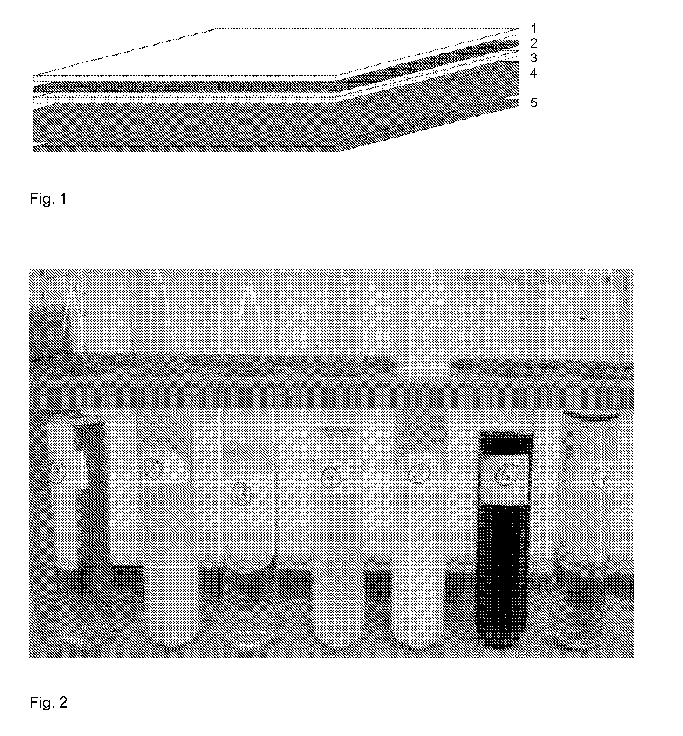

Die erfindungsgemäßen Kunststoffzusammensetzungen können unmittelbar zur Behandlung von (bedrucktem, "dekorativem") Papier verwendet werden. Bei den Dekor-Papieren handelt es sich insbesondere um mit einem bestimmten dekorativen Druck versehenes Papier. Dabei ist das Papier mit einer erfindungsgemäßen Kunststoffzusammensetzung bzw. Kunststoffzubereitung im Kern zu durchtränken, vorzugsweise jedoch nur an den Oberflächen zu beschichten, ganz besonders bevorzugt nur an der dem geeigneten Substrat wie Span- oder Faserplatte zugewandten Seite (siehe Fig. 1). Nach Aushärtung (z.B. durch Wärme-Exposition, vorzugsweise im Verbund mit mechanischem Druck, Strahlung oder anderen geeigneten Energie-übertragenden Verfahren (wie beispielsweise Elektronenstrahl- und/oder UV-Härtung) erhält man - vorzugsweise im Verbund mit einem geeigneten Substrat wie beispielsweise einer Faser- oder Spanplatte - eine feste Oberfläche, bestehend aus dem erfindungsgemäßen Kunststoffmaterial.

Werden die erfindungsgemäßen Kunststoffzusammensetzungen bzw. Kunststoffzubereitungen zum Behandeln von Papieren eingesetzt bietet sich neben der bereits beschriebenen Anwendung im Verbund mit Dekor-Papieren alternativ und/oder ergänzend auch die Möglichkeit, andere Papiere wie beispielweise bereits Al₂O₃-enthaltendes Overlaypapier 1 mit erfindungsgemäßen Mischungen zu behandeln. Ferner kann mit den erfindungsgemäßen Kunststoffzusammensetzungen bzw. Kunststoffzubereitungen auch Overlay-Papier behandelt werden, das a priori kein Al₂O₃ enthält und dem dieser Füllstoff erst nach Einarbeitung in die erfindungsgemäßen Mischungen sozusagen indirekt übermittelt wird. Auch in diesen Fällen erhält man nach Härtung (z.B. durch Wärme-Exposition, vorzugsweise im Verbund mit mechanischem Druck, Strahlung oder anderen geeigneten Energie-übertragenden Verfahren (wie beispielsweise Elektronenstrahl-und/oder UV-Härtung)) - vorzugsweise im Verbund mit einem geeigneten Substrat wie beispielsweise einer Faser- oder Spanplatte - eine feste Oberfläche, bestehend aus dem erfindungsgemäßen Kunststoffmaterial.

Alternativ und/oder ergänzend können die erfindungsgemäßen Kunststoffzusammensetzungen bzw. Kunststoffzubereitungen auch auf andere Oberflächen, wie z.B. Kunststofffolien beispielsweise aus Polyethylen (PE), Polypropylen (PP) oder Polyethylenterephthalat (PET), auf textile Fasern bzw. Vliese, beispielsweise auf nativer Basis, wie z.B. Hanf und/oder auch auf synthetischer Basis, wie z.B. Carbonfasern und/oder auf die in Figur 1 dargestellten Trägermaterialien wie beispielsweise Faser- oder Spanplatten aufgebracht werden. Vorzugsweise geschieht dies durch Aufbringen einer erfindungsgemäßen Kunststoffzubereitung auf die Oberfläche (vor, nach und/oder während des Pressvorganges) oder durch direkte Elektrodeposition der erfindungsgemäßen Kunststoffzusammensetzungen bzw. Kunststoffzubereitungen zugrundeliegenden Feststoffen auf der Plattenoberfläche.

Bei dem erfindungsgemäßen Verfahren sowie im Falle des erfindungsgemäßen Kunststoffmaterials, der erfindungsgemäßen Verwendung, der erfindungsgemäßen Kunststoffzusammensetzung und der erfindungsgemäßen Kunststoffzubereitung handelt es sich bei bestimmten Ausführungsformen der Erfindung bei dem Kunststoffmaterial um einen Kunststoffgegenstand, ein Kunststoffbauteil oder eine Kunststoffbeschichtung zum Beschichten von Gegenständen, die beispielsweise ausgewählt sind unter Möbeln, Fußboden-, Wand- und Deckenverkleidungslaminaten oder Bauteilen davon.

Bei einer bestimmten Ausführungsform erfolgt die Verwendung insbesondere bei der "Versiegelung" von bereits ausgehärteten Polykondensatoberflächen durch nachträgliches Aufbringen auf z.B. Fußbodenlaminate oder Möbelbauteile.

Bei manchen Ausführungsformen der Erfindung werden die Trägermaterialien vor dem Aufbringen der Beschichtung vorimprägniert mit geeigneten Klebstoffen, vorzugsweise aus dem Bereich der Polykondensate oder der Acrylate.

Bei manchen Ausführungsformen erfolgt die Beschichtung durch Laminieren (direkter Wärmeübertrag, kombiniert mit Druck) und/oder durch direktes Lackieren.

Bei bestimmten Ausführungsformen wird die Beschichtung gehärtet durch Einsatz von Wärme, vorzugsweise im Verbund mit Druck, Strahlung oder anderen geeigneten Energie-übertragenden Verfahren wie beispielsweise Elektronenstrahl- und/oder UV-Härtung.

Bei bestimmten Ausführungsformen wird die erfindungsgemäße Kunststoffzusammensetzung bzw. Kunststoffzubereitung mit dem Trägermaterial durch Abmischung der Komponenten mit den jeweiligen Bindemitteln für die Trägermaterialien verbundenen. Als Bindemittel für die Trägermaterialien kommen dabei Polykondensate, wie beispielsweise Phenol-Formaldehyd-, Melamin-Formaldehyd- und Harnstoff-Formaldehyd-Kondensationsprodukte, Kondensationsprodukte von Mischungen auf Basis von Phenol, Melamin und Harnstoff mit Formaldehyd, auf Basis von Melamin und Harnstoff mit Formaldehyd, auf Basis von Phenol und Melamin mit Formaldehyd oder auf Basis von Phenol und Harnstoff mit Formaldehyd sowie Bindemittel auf Isocyanat-Basis und Gemische der vorgenannten Polykondensate in Betracht. Nach dem Abmischen der Bindemittel mit den erfindungsgemäßen Kunststoffzusammensetzungen bzw. Kunststoffzubereitungen werden diese den Fasern bzw. Spänen zugesetzt und im Nachgang durch Pressen unter Erwärmen zum Trägermaterial gehärtet.

In diesem Fall können in nachfolgenden Schritten die anderen Papierlagen aus Figur 1, wie z.B. das Gegenzug-Papier, das oder die Dekor-Papier(e), das "Underlay"-Papier und das "Overlay"-Papier wahlweise zusätzlich mit den erfindungsgemäßen Kunststoffzusammensetzungen bzw. Kunststoffzubereitungen nach Zugabe von Katalysatoren ("Härtern"), Netzmitteln, Trennmitteln und ggf. weiteren Additiven behandelt werden. Auch in diesem Fall erhält man nach Härtung (z.B. durch Wärme-Exposition, vorzugsweise im Verbund mit mechanischem Druck, Strahlung oder anderen geeigneten Energie-übertragenden Verfahren (wie beispielsweise Elektronenstrahl-und/oder UV-Härtung)) - vorzugsweise im Verbund mit einem geeigneten Substrat wie beispielsweise einer Faser- oder Spanplatte - eine feste Oberfläche, bestehend aus dem erfindungsgemäßen Kunststoffmaterial.

Bei einer alternativen Ausführungsform der Erfindung wird die Beschichtung mit einem oder mehreren der folgenden Verfahren durchgeführt: PVD ("physical vapor deposition"), wie beispielsweise Vakuum-Evaporation, Sputter-Evaporation und/oder "Ion-plating"-Evaporation, oder CVD ("chemical vapor deposition").

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Aus den anhängenden Figuren und deren nachfolgender Beschreibung werden z.T. wesentliche und z.T. bevorzugte Merkmale der Erfindung sowie mögliche Kombinationen dieser Merkmale ersichtlich, ohne das hierdurch irgendeine Beschränkung der Erfindung auf genau diese Merkmalskombinationen erfolgen soll.
- Fig. 1: zeigt den schematischen Aufbau eines Laminates, das mit einem erfindungsgemäßen Kunststoffmaterial behandelt wurde.
- Fig. 2: zeigt eine Fotografie von erfindungsgemäßen Kunststoffzubereitungen und von Vergleichskunststoffzubereitungen.
- Fig. 3: zeigt eine Fotografie eines Verdünnungstests mit einer Kunststoffzubereitung aus dem Stand der Technik.
- Fig. 4: zeigt eine Fotografie eines Verdünnungstests mit einer Kunststoffzubereitung aus dem Stand der Technik.
- Fig. 5: zeigt eine Fotografie eines Verdünnungstests mit einer erfindungsgemäßen Kunststoffzubereitung.

Figur 1 zeigt den schematischen Aufbau eines typischen Laminates. In einem solchen Laminat ist auf einen Träger 4 ein ggf. optionales Underlay-Papier 3 angeordnet über welchem ein Dekor-Papier 2 auflaminiert ist. Dieses wird von einem ggf. optionalen Overlay-Papier 1 abgedeckt. Auf der unteren Seite weist das Laminat bei manchen Ausführungsformen optional ein sogenanntes Gegenzug-Papier 5 auf, das im Falle von Möbelanwendungen typischerweise alternativ durch ein mit 2 korrelierendes weiteres Dekor-Papier substituiert wird.

Figur 2 zeigt eine Fotografie von erfindungsgemäßen Kunststoffzubereitungen und von Vergleichskunststoffzubereitungen. Bei diesen Zubereitungen handelt es sich im Einzelnen um flüssige Kunststoffzubereitungen mit den in den unten angegebenen Beispielen spezifizierten Zusammensetzungen.

### Methode zur Bestimmung der Transparenz bzw. Trübung einer Flüssigkeit

DIN/EN 27027 definiert den Begriff "Trübung" als "die Verringerung der Durchsichtigkeit einer Flüssigkeit, verursacht durch die Gegenwart ungelöster Substanzen". Gemäß DIN/EN 27027 wird zur messtechnischen Erfassung ein Trübungsmessgerät zunächst mit normierten Kalibrierflüssigkeiten geeicht, wobei die Kalibrierflüssigkeiten unterschiedliche Konzentrationen an Formazin in Wasser enthalten und dementsprechend unterschiedliche Trübungen aufweisen.

Die Angabe der Trübung für eine zu untersuchende Probe erfolgt dann in Trübungseinheiten /Formazin (Abkürzung: TE/F). Für das menschliche Auge ist eine Flüssigkeit im wesentlichen transparent, wenn 50 TE/F unterschritten werden. Eine Flüssigkeit ist für das menschliche Auge absolut transparent, wenn 20 TE/F unterschritten werden. Der Begriff "transparent" umfasst hierin sowohl "im wesentlichen transparent" als auch "absolut transparent". Eine Flüssigkeit ist im Sinne der vorliegenden Erfindung mit anderen Worten dann transparent, wenn deren TE/F-Wert kleiner als 50 TE/F ist oder gar kleiner als 20 TE/F ist.

Zur Erfassung der Trübung einer Flüssigkeit stehen verschiedene Messgeräte zur Verfügung, wobei die Trübung stets als Intensität des Streulichts in einem bestimmten Winkel zur emittierenden Lichtquelle einer definierten Wellenlänge gemessen wird.

Bei der vorliegenden Anmeldung wurde die Trübung bei Raumtemperatur (20°C) mit Licht der Wellenlänge 650 nm gemessen, wobei das Streulicht der zu untersuchenden Probe in einem Winkel von 25° gemessen wurde. Liegt der auf diese Weise gemessene Trübungs- bzw. Transparenzwert einer Flüssigkeit unterhalb von 50 TE/F, so ist die untersuchte Flüssigkeit im wesentlichen transparent im Sinne der vorliegenden Erfindung. Liegt der auf diese Weise gemessene Trübungs- bzw. Transparenzwert einer Flüssigkeit unterhalb von 20 TE/F, so ist die untersuchte Flüssigkeit im Sinne der vorliegenden Erfindung absolut transparent.

Die in den Beispielen angegebenen Messergebnisse wurden mit einem mit dem Trübungssensor InPro 8600 der Firma Mettler Toledo ermittelt. Weitere Information zu diesem Trübungssensorsind im Internet unter "www.mt.com" frei verfügbar.

### Methode zur Bestimmung der Transparenz bzw. Trübheit einer Flüssigkeit

Methodisch wird die Wasserverdünnbarkeit der hier beschriebenen Systeme wie folgt bestimmt: 10 g des zu prüfenden Produktes werden in einen Erlenmeyerkolben mit einem Volumen von 250 ml eingewogen und in einem Wasserbad auf 20°C temperiert. Mit einem Messzylinder wird nun in kleinen Mengen soviel destilliertes Wasser (20 °C) hinzugegeben, bis das Produkt Anzeichen einer Eintrübung zeigt. Durch Rückwägung kann der Verbrauch an destilliertem Wasser nochmals überprüft werden. Je nach vorherigem Lagerzustand beträgt die Wasserverdünnbarkeit der hier beschriebenen Polymerkomponente (A) mit begrenzter Wasserverdünnbarkeit typischerweise 1:0,5 Polymerkomponente (A) : Wasser, bevor eine Trübung einsetzt. Das Einsetzen einer Trübung wird zunächst visuell festgestellt und anschließend wie oben beschrieben quantifiziert.

### Beispiele

### Beispiel 1 (Vergleichsbeispiel):

MF GP^{®} 1780 (Georgia Pacific, USA) ist ein Polykondensat auf Basis von 1 mol Melamin und 1,8 mol Formaldehyd (Festkörper: ca. 60 Gewichtsprozent; ca. 40 Gewichtsprozent Wasser). Die maximale Wasserverdünnbarkeit von MF GP^{®} 1780 liegt (bei T=20 °C) bei 100 Teile MF GP^{®} 1780 zu 25 Teilen Wasser. MF GP^{®} 1780 enthält daher im Sinne der vorliegenden Erfindung eine Polymerkomponente (A), die eine begrenzte Wasserverdünnbarkeit von höchstens 1:4 Polymerkomponente (A) zu Wasser aufweist.

MF GP^{®} 1780 ist nach Abschluss der Polykondensationsreaktion etwa 2 Wochen lang bei T=20 °C ein Beispiel für eine transparente Kunststoffzubereitung (klare Verdünnung). Nach ca. 2 Wochen trübt diese Formulierung zunehmend ein, weil sich durch die unentwegt fortschreitende Kondensation zunehmend hochmolekulargewichtige, wasserunlösliche Polykondensate bilden, die schließlich mit einhergehender Trübung ausflocken.

### Beispiel 2 (Vergleichsbeispiel):

Wird die Kunststoffzubereitung des Beispieles 1 mit der gleichen Masse Wasser verdünnt (50%ige wässrige Verdünnung von MF GP^{®} 1780), flocken die bereits a priori im Rahmen einer gegebenen Molekulargewichtsverteilung enthaltenen hochmolekulargewichtigen, schlecht wasserverdünnbaren Polykondensate aus. Wegen der begrenzten Wasserverdünnbarkeit der Polymerkomponente (A) kommt es zu einer Eintrübung.

### Beispiel 3 (Vergleichsbeispiel):

Marlophen^{®} NP 10 ist ein nichtionisches Polymer vom Typ der Nonylphenolethoxylate (mit 10 mol Ethylenoxid umgesetztes Nonylphenol; Sasol, Deutschland). Wird die Kunststoffzubereitung des Beispieles 1 mit Marlophen^{®} NP 10 gemischt (50% MF GP^{®} 1780 + 50% Marlophen^{®} NP 10), erhält man eine transparente Kunststoffzubereitung.

### Beispiel 4 (Vergleichsbeispiel):

Für Mischungen der Kunststoffzubereitung des Beispieles 1 mit nichtionischen Polymeren vom Typ der propoxylierten Polyethylenglykole (50% MF GP^{®} 1780 + 50% Synperonic^{®} PE/L92, Synperonic^{®}PE/L92 ist ein POP-POE-Blockcoplymer (Croda, U.K.)) oder vom Typ der ethoxylierten Nonylphenole aus dem vorhergehenden Beispiel gilt, dass, wenn diese Mischungen im Massenverhältnis 1:1 mit Wasser verdünnt werden, es zu einer Eintrübung und Ausflockungen kommt. Die genannten organischen, nichtionischen Polymere verbessern die Wasserverdünnbarkeit von MF GP^{®} 1780 also nicht mit Blick auf eine Unterdrückung der Eintrübung. Daher sind Abmischungen solcher nichtionischer Polymere mit der Polymerkomponente vom Typ (A) als nachteilige Gegenbeispiele zu erfindungsgemäßen Abmischungen der Polymerkomponente vom Typ (A) mit der Modifikatorkomponente (B) zu sehen.

### Beispiel 5 (Vergleichsbeispiel):

Wird die Kunststoffzubereitung des Beispieles 1 mit nicht-polymeren, nichtionischen Zuschlagstoffen (hier: der Propylenglykolmonomethylether Dowanol^{®} PM; Dow Chemical, Deutschland) und Wasser gemischt (50% Wasser + (50% MF GP^{®} 1780 + 50% Propylenglykolmomomethylether), erhält man keine klare Verdünnung. Niedermolekulare, nichtionische Komponenten wie Propylenglykolmonomethylether verhalten sich allerdings analog zu den unter 3 und 4 beschriebenen polymeren Komponenten und eignen sich daher nicht zur Verbesserung der Wasserverdünnbarkeit der Polymerkomponente (A) mit Blick auf eine Unterdrückung der Eintrübung. Dieses Gegenbeispiel zeigt, dass die Modifikatorkomponente mindestens oligomeren Charakter haben muß.

### Beispiel 6 (gemäß der vorliegenden Erfindung):

Wird die Kunststoffzubereitung des Beispieles 1 gemäß der vorliegenden Erfindung mit einer erfindungsgemäßen Modifikatorkomponente (B) (hier Siral-887) versetzt (50% MF GP^{®} 1780 + 50% Siral-887), erhält man eine ideal gemischte Kunststoffzusammensetzung bzw. Kunststoffzubereitung, wie Sie bei der vorliegenden Erfindung zur Anwendung kommt.

Siral-887 (SIRIUS Technologie GmbH, Deutschland) ist eine 50 gewichtsprozentige, wässrige Verdünnung eines Polymeren auf Basis sulfonierter aromatischer Kohlenwasserstoffe, die zu Natriumsalzen umgesetzt und mit Formaldehyd vernetzt wurden (Siral = 50 Gew.% Wasser + 50 Gew.% alkylierter (vorwiegend C1- bis C10-Kettenlänge, inklusive Isomerer), polyzyklischer (vorwiegend Naphthalin), sulfonierter Aromat als Natriumsalz, vernetzt mit Formaldehyd, wobei das Molekulargewicht vorzugsweise zwischen 200 und 10000 d liegt bzw. von 200 bis 5000 g/mol beträgt). Siral-887 ist damit im Sinne der vorliegenden Erfindung eine erfindungsgemäße Modifikatorkomponente (B).

### Beispiel 7 (gemäß der vorliegenden Erfindung):

Wird die Mischung von Beispiel 6 mit Wasser verdünnt (50% Wasser + 50% Kunststoffzubereitung von Beispiel 6), erhält man eine transparente Kunststoffzubereitung. Durch den Zusatz der Modifikatorkomponente (B) erlangt die Polymerkomponente (A) eine erhöhte Wasserverdünnbarkeit, so dass eine große Verdünnung vorgenommen werden kann, ohne dass es zu Eintrübungen und nachfolgend zu Ausflockungen kommt.

### Beispiel 8 (Vergleichsbeispiel):

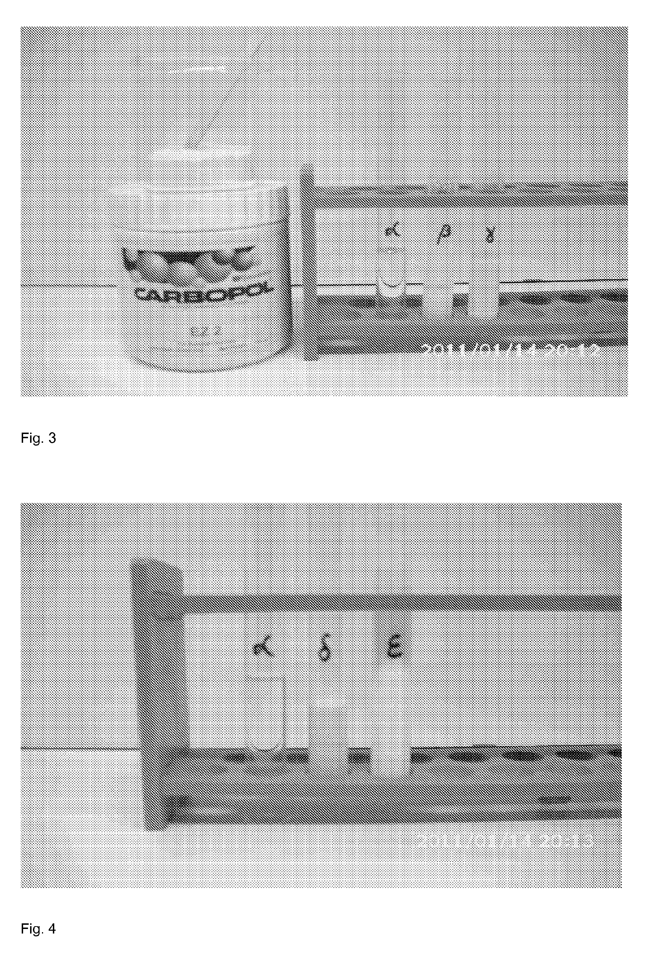

Carboxylgruppenhaltige Oligo- oder Polymere werden üblicherweise als Feststoffe oder als wässrige Dispersionen in den Handel gebracht. Ein Beispiel für ein festes carboxylgruppenhaltiges Polymer ist das Polyacrylsäuregemisch Carbopol^{™} EZ 2 der Firma BF Goodrich. Wie aus Abbildung Figur 3 ersichtlich erfolgt bei Versetzen der Kunststoffzubereitung des Beispieles 1 (Reagenzglas mit Beschriftung "α") mit Carbopol^{™} EZ 2 sofort eine Eintrübung (Reagenzglas mit Beschriftung "β" in Abbildung Figur 3). Bei weiterer Zugabe von Wasser (Reagenzglas mit Beschriftung "γ" in Abbildung Figur 3) verstärkt sich dabei die Eintrübung noch. Aus diesem Vergleichsbeispiel ist unmittelbar ersichtlich, dass durch die Zugabe fester, carboxylgruppenhaltiger Oligo-oder Polymere wie Polyacrylate oder Polymethacrylate keine flüssigen, transparent erfindungsgemäß mit Wasser verdünnbaren Kunststoffzubereitungen erhalten werden. Daher sind feste carboxylgruppenhaltige Oligo- oder Polymere im Sinne der hier vorliegenden Anmeldung mit Blick auf eine Unterdrückung der Eintrübung nicht als Modifikator-Komponente B geeignet.

### Beispiel 9 (Vergleichsbeispiel):

Ein Beispiel für ein flüssige, wasserhaltige Zubereitung carboxylgruppenhaltiger Polymere sind die Primol^{™}-Produkte der Firma Rohm und Haas bzw. nunmehr Dow. Wie aus Abbildung Figur 4 ersichtlich erfolgt bei Versetzen der Kunststoffzubereitung des Beispieles 1 (Reagenzglas mit Beschriftung "α") mit Primol^{™} zwar eine Einfärbung, es erfolgt aber keine Eintrübung (Reagenzglas mit Beschriftung "δ" in Abbildung Figur 4). Bei Zugabe von Wasser (Reagenzglas mit Beschriftung "ε" in Abbildung Figur 4) erfolgt jedoch eine massive Eintrübung. Aus diesem Vergleichsbeispiel ist unmittelbar ersichtlich, dass durch die Zugabe flüssiger, carboxylgruppenhaltiger Oligo- oder Polymerformulierungen wie Polyacrylat- oder Polymethacrylat-formulierungen keine erfindungsgemäßen flüssigen, transparenten mit Wasser verdünnbaren Kunststoffzubereitungen erhalten werden. Daher sind flüssige, carboxylgruppenhaltige Oligo- oder Polymerformulierungen wie Polyacrylat- oder Polymethacrylat-formulierungen im Sinne der hier vorliegenden Anmeldung mit Blick auf eine Unterdrückung der Eintrübung nicht als Modifikator-Komponente B geeignet.

### Beispiel 10 (gemäß der vorliegenden Erfindung):

Mit einem Trübungssensor der Firma Mettler Toledo InPro 6800 wurden für die Wasserkontrolle und die unten spezifizierten Proben 1, 2 und 3 bei einer Wellenlänge von 650 nm in einem Streuwinkel von 25° und bei einer Temperatur von 20°C die folgenden Messergebnisse erzielt:

| | Trübung in TE / F |
|---|---|
| Dest. Wasser (Kontrolle) | 0,00 |
| Probe 1 (=MF GP^{®} 1780=Polymerkomponente A) | 0,06 |
| Probe 2 (=Verdünnung von Probe 1 mit dest. Wasser, im Verhältnis 95 Gew.% dest. Wasser: 5 Gew.% Probe 1) | 1080,00 |
| Probe 3 (=Verdünnung einer Mischung aus Probe 1 (MF GP^{®} 1780 =Polymerkomponente A) mit Siral-887 (Komponente B) im Gewichtsverhältnis 1:1, mit dest. Wasser im Verhältnis 90 Gew.% dest. Wasser mit 10 Gew.% der vorbeschriebenen Mischung der Komponenten A und B) | 14,90 |

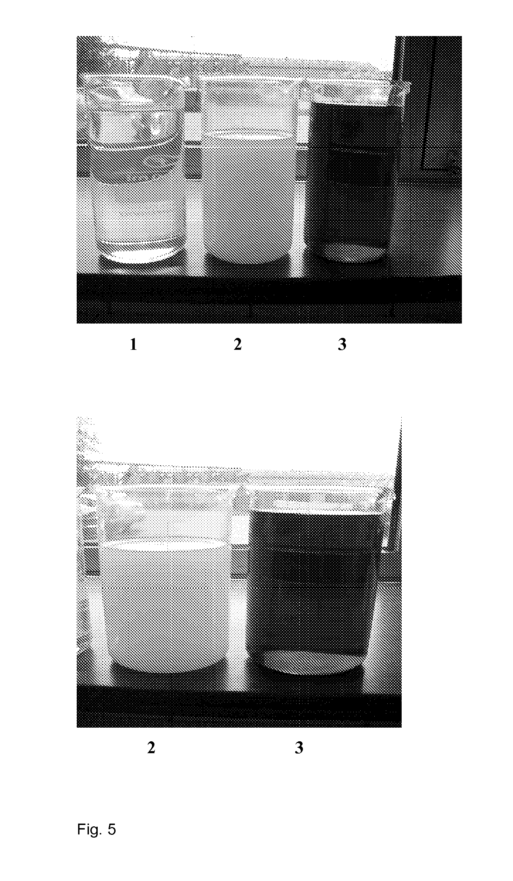

In dem oberen Bild von Figur 5 befindet sich links die Probe 1 (=Polymerkomponente A). Bei Verdünnung der Probe 1 mit Wasser, entsteht z.B. bei der Konzentration 5 Gewichtsprozent eine Emulsion (Probe 2 in der Bildmitte). Setzt man der Probe 1 hingegen die erfindungsgemäße Komponente B zu, so erhält man bei gleicher Konzentration (5 Gewichtsprozent) eine transparente Flüssigkeit (Probe 3), so wie sie im Bild rechts abgebildet ist. Zur Verdeutlichung der Transparenz wurden die Proben 2 und 3 nochmals gemeinsam fotografisch erfasst (unteres Bild von Figur 5).

Diese Messergebnisse zeigen, dass die Komponente B die Wasserverdünnbarkeit im Sinne der Transparenz der nur begrenzt wasserverdünnbaren Polymerkomponente A massiv verbessert, und zwar so, dass für das menschliche Auge im vorliegenden Fall keine wahrnehmbare Trübung mehr vorliegt.

Es wird darauf hingewiesen, dass es für den Fachmann selbstverständlich ist, dass die oben angegebenen erfindungsgemäßen Beispiele lediglich dazu dienen, die als Ausführungsbeispiele wiedergegebenen möglichen Ausführungsformen der vorliegenden Erfindung beispielhaft anzugeben. Der Fachmann wird daher ohne Weiteres verstehen, dass darüber hinaus auch alle anderen Ausführungsformen, die die in den Ansprüchen genannten erfindungsgemäßen Merkmale oder Merkmalskombinationen aufweisen, innerhalb des Schutzumfangs der Erfindung liegen. Auf die umfassende, explizite Darstellung sämtlicher denkbarer Ausführungsformen wird hier nur der Kürze und der Lesbarkeit der Beschreibung wegen verzichtet.

## Patentansprüche

1. Verfahren zur Herstellung eines Kunststoffmaterials aus einer Kunststoffzusammensetzung, wobei die Kunststoffzusammensetzung eine Polymerkomponente (A) enthält, die eine begrenzte Wasserverdünnbarkeit von höchstens 1:4 Polymerkomponente (A) zu Wasser aufweist, **dadurch gekennzeichnet, dass** man
a) der Kunststoffzusammensetzung zur Erhöhung der Wasserverdünnbarkeit der Polymerkomponente (A) eine Modifikatorkomponente (B) zusetzt, wobei die Modifikatorkomponente (B) ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht, wobei die Modifikatorkomponente (B) anionisch modifiziert ist durch Säuregruppen, die ausgewählt sind unter -NO₂⁻, -NO₃⁻, -SO₂⁻, - SO₃⁻, -SO₄²⁻, -PO₂²⁻, -PO₃²⁻, -PO₄²⁻, sowie entsprechenden Thio-Phosphaten, Thio-Phosphonaten, Thio-Sulfaten und Thio-Sulfonaten, und unter Sulfonsäure, Cyanursäure und Isocyanursäure, und wobei die wenigstens eine Vernetzerkomponente ein Aldehyd oder ein Aldehydvorläufer ist, und
b) eine Verdünnung der Kunststoffzusammensetzung in dem Verhältnis 1:1 bis 1:1000 Kunststoffzusammensetzung zu Wasser einstellt.

2. Verfahren nach Anspruch 1, **dadurch gekennzeichnet, dass** die Polymerkomponente (A), unter Polykondensaten, Polyacrylaten, Polymethacrylaten, Copolymeren Acryl-/Methacrylaten, Polyesteracrylaten, Epoxyacrylaten, Urethanacrylaten und Kautschukelastomeren ausgewählt ist.

3. Verfahren nach Anspruch 1, **dadurch gekennzeichnet, dass** die Polymerkomponente (A) ein Polykondensationsprodukt aus 1 mol Melamin und/oder Harnstoff und/oder Phenol und 1 bis 3,5 mol Formaldehyd ist.

4. Verfahren nach einem der Ansprüche 1 bis 3, **dadurch gekennzeichnet, dass** das Mischungsverhältnis von Komponente (A) zu Komponente (B) 80:20 bis 20:80 beträgt.

5. Verfahren nach einem der Ansprüche 1 bis 4, **dadurch gekennzeichnet, dass** der eine oder die mehreren anionisch modifizierten aromatischen oder aliphatischen Bausteine ausgewählt sind unter anionisch modifiziertem Toluol, Xylol, Mesitylen, Benzol, Cresol, Resorcin, Naphthol, Naphthalin, Melamin, Anthracen, Phenol, Bisphenol A, Lignin und Harnstoff oder anionisch modifizierten alkylierten, alkoxylierten oder arylierten Derivaten dieser Bausteine.

6. Verfahren nach einem der Ansprüche 1 bis 5, **dadurch gekennzeichnet, dass** die wenigstens eine Vernetzerkomponente der Modifikatorkomponente (B) ausgewählt ist unter Acetaldehyd, Butyraldehyd, Butyldialdehyd, Formaldehyd, Glyoxal, Paraformaldehyd, Paraldehyd oder Alkoholen, die unter geeigneten Reaktionsbedingungen in Gegenwart von geeigneten Katalysatoren frei Aldehyde ergeben.

7. Verfahren nach einem der Ansprüche 1 bis 6, **dadurch gekennzeichnet, dass** die transparente Kunststoffzubereitung eine, zwei oder drei verschiedene Modifikatorkomponenten vom Typ (B) enthält.

8. Verfahren nach einem der Ansprüche 1 bis 7, **dadurch gekennzeichnet, dass** das Molekulargewicht der Modifikatorkomponente (B) in dem Bereich von 150 g/mol bis 500 Millionen g/mol.

9. Verfahren nach einem der Ansprüche 1 bis 8, **dadurch gekennzeichnet, dass** man aus der Kunststoffzusammensetzung eine Kunststoffzubereitung erzeugt, die zusätzlich eines oder mehrere unter Pigmente, Füllstoffe, Katalysatoren, Dispergiermittel, Netzmittel, Trennmittel und/oder weitere Zuschlagstoffe/Additive enthält.

10. Verwendung einer Modifikatorkomponente (B) zur Erhöhung der Wasserverdünnbarkeit einer Polymerkomponente (A), die von Hause aus eine begrenzte Wasserverdünnbarkeit von höchstens 1:4 Polymerkomponente (A) zu Wasser aufweist, bei der Herstellung eines Kunststoffmaterials umfassend die Polymerkomponente (A), **dadurch gekennzeichnet, dass** die Modifikatorkomponente (B) ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht, wobei die Modifikatorkomponente (B) anionisch modifiziert ist durch Säuregruppen, die ausgewählt sind unter -NO₂⁻, -NO₃⁻, -SO₂⁻, -SO₃⁻, -SO₄²⁻, -PO₂²⁻, -PO₃²⁻, -PO₄²⁻, sowie entsprechenden Thio-Phosphaten, Thio-Phosphonaten, Thio-Sulfaten und Thio-Sulfonaten, und unter Sulfonsäure, Cyanursäure und Isocyanursäure, und wobei die wenigstens eine Vernetzerkomponente ein Aldehyd oder ein Aldehydvorläufer ist.

11. Kunststoffzusammensetzung, umfassend eine Polymerkomponente (A), die eine begrenzte Wasserverdünnbarkeit von höchstens 1:4 Polymerkomponente (A) zu Wasser aufweist, **dadurch gekennzeichnet, dass** die Zusammensetzung zusätzlich eine Modifikatorkomponente (B) umfasst, wobei die Modifikatorkomponente (B) ein Oligomer oder Polymer mit einer Rückgratkomponente und mit wenigstens einer Vernetzerkomponente ist, wobei die Rückgratkomponente aus einer oder mehreren anionisch modifizierten aromatischen oder aliphatischen Bausteinen besteht, wobei die Modifikatorkomponente (B) anionisch modifiziert ist durch Säuregruppen, die ausgewählt sind unter -NO₂⁻, -NO₃⁻, -SO₂⁻, -SO₃⁻, -SO₄²⁻, -PO₂²⁻, -PO₃²⁻, -PO₄²⁻, sowie entsprechenden Thio-Phosphaten, Thio-Phosphonaten, Thio-Sulfaten und Thio-Sulfonaten, und unter Sulfonsäure, Cyanursäure und Isocyanursäure, und wobei die wenigstens eine Vernetzerkomponente ein Aldehyd oder ein Aldehydvorläufer ist.

12. Mit Wasser verdünnte Kunststoffzubereitung zur Verwendung bei der Herstellung eines Kunststoffmaterials, wobei die Kunststoffzubereitung eine wässrige Verdünnung einer Kunststoffzusammensetzung nach Anspruch 11 ist.

13. Verfahren nach einem der Ansprüche 1 bis 9, Verwendung nach Anspruch 10, Kunststoffzusammensetzung nach Anspruch 11 oder Kunststoffzubereitung nach Anspruch 12, **dadurch gekennzeichnet, dass** das Kunststoffmaterial ein Kunststoffgegenstand, ein Kunststoffbauteil oder eine Kunststoffbeschichtung zum Beschichten von Laminaten und anderen Trägermaterialien ist.

14. Verfahren, Verwendung, Kunststoffzusammensetzung oder Kunststoffzubereitung nach Anspruch 13, **dadurch gekennzeichnet, dass** das Trägermaterial ausgewählt ist unter Kunststofffolien, textilen Fasern, Vliesen, Faser-, Span- oder OSB-Platten, Dekor-Papieren und Al₂O₃-haltigen "Overlay"-Papieren.

15. Verfahren, Verwendung, Kunststoffzusammensetzung oder Kunststoffzubereitung nach einem der Ansprüche 13 oder 14, **dadurch gekennzeichnet, dass** das Kunststoffmaterial eine Kunststoffbeschichtung zum Beschichten von Gebrauchsgegenständen ist, die ausgewählt sind unter Möbeln, Fußboden-, Wand- und Deckenverkleidungslaminaten oder Bauteilen davon.
